# DEMANDE DE BREVET EUROPEEN

(11) **EP 1 199 287 A1**
(43) Date de publication de la demande: **24.04.2002**
(21) Numéro de dépôt: 01811009.8
(22) Date de dépôt: 16.10.2001
(51) Int. Cl.: C03C 1/00

(54) **Procédé de préparation de composés verriers**

(30) Priorité: 18.10.2000 FR 0013324
(71) Demandeur: Clariant Finance (BVI) Limited, Road Town, Tortola (VG)
(72) Inventeur: Perard, Marie-Laure, 60200 Compiègne (FR); Richard, Christian, 73000 Chambery (FR)
(74) Mandataire: D'haemer, Jan Constant

(57) **Abrégé**

Procédé de préparation d'un composé verrier dans lequel on mélange dans un mélangeur:
- 30 à 70 % d'éléments formateurs du réseau vitreux à base d'oxyde de silicium, d'aluminium, de bore ou de phosphore;
- 1 à 30 % en poids d'éléments fondants à base d'oxydes alcalins;
- 5 à 50 % en poids d'éléments modificateurs du réseau vitreux à base composés oxygénés et non carbonés de calcium, baryum, strontium, plomb, zinc;
- 0,1 à 2 % en poids d'un système affinant;
puis que l'on effectue une fusion et un affinage à une température égale ou supérieure à la température de cueillage du verre et pour la production de verre en four à pots ou en four continu.

## Description

La présente invention a pour objet un nouveau procédé de préparation de composés verriers.

D'une manière classique, les compositions pour la fabrication du verre sont préparées à partir de matières premières naturelles ou synthétiques particulièrement décrites dans les Encyclopédies Ullmann's 5^{ème} édition, 1989, vol. A12, p.408-410 et Kirk Othmer 4^{ème} édition, 1994, vol. 12, p.593-597.

Ces compositions comprennent essentiellement quatre types de matières premières:
- les éléments formateurs du réseau vitreux comme les oxydes de silicium, d'aluminium, de bore ou de phosphore. Ceux-ci, sous forme d'oxydes ou de sels non décomposables existent souvent à l'état naturel et font l'objet d'un traitement physique, lavage et broyage. Pour augmenter la qualité du mélange des compositions et accélérer la fusion des verres, on choisit de préférence des matières ayant la granulométrie la plus fine et si nécessaire on procède à un tamisage;
- les éléments fondants du réseau vitreux comme les oxydes de lithium, sodium et potassium. Ceux-ci sont préparés par voie chimique et introduits dans les compositions sous forme de carbonates de lithium, sodium ou potassium;
- les éléments modificateurs du réseau vitreux comme les oxydes de calcium, baryum, strontium, plomb, zinc, etc. Ceux-ci peuvent être ajoutés sous forme d'oxydes comme l'oxyde de plomb, de zinc ou sous forme de carbonates naturels comme le carbonate de calcium, ou de carbonates synthétiques comme le carbonate de baryum ou strontium;
- les éléments du système affinant. On préfère souvent un système affinant oxydo-réducteur à base de nitrates alcalins et d'oxyde d'antimoine ou d'arsenic. Ce système affinant entraîne les microbulles qui se forment lors de la fusion par formation de grosses bulles. Son dosage va dépendre de la quantité de matières volatiles présentes dans la composition.

La fabrication de verre est réalisée comme suit. Les éléments du réseau vitreux, essentiellement des carbonates et des oxydes, sont mélangés dans l'atelier dit "de composition", introduits dans un four équipé de substance réfractaire et portés à des températures suffisantes afin d'abord de décomposer les carbonates, puis de former le verre en fusion de la manière la plus homogène possible. L'obtention d'un verre homogène et sans défauts implique la décomposition totale des carbonates et le maintien de la qualité des substances réfractaires.

Si l'homogénéité des verres s'obtient facilement par une bonne qualité granulométrique des matières premières et une circulation naturelle des matières en fusion, l'absence de défauts est plus difficile à maîtriser.

D'une manière générale, les compositions pour la fabrication du verre comprennent les matières principales suivantes:
Des éléments formateurs représentant entre 40 et 95 % en poids,
   - l'oxyde de silicium, SiO₂;
   - autres oxydes, Al₂O₃, B₂O₃, P₂O₅;
Des éléments fondants représentant entre 5 et 35 % en poids,
   - le carbonate de lithium, Li₂CO₃;
   - le carbonate de sodium, Na₂CO₃;
   - le carbonate de potassium, K₂CO₃;
Des éléments modificateurs représentant entre 5 et 50 % en poids,
   - le carbonate de calcium, CaCO₃;
   - le carbonate de baryum, BaCO₃;
   - l'oxyde de plomb, PbO;
   - l'oxyde de zinc, ZnO, etc.;
Des éléments du système affinant,
   - le nitrate de sodium ou potassium représentant entre 1 et 4 %;
   - les oxydes d'antimoine ou d'arsenic représentant entre 0,5 et 1 %.

DE-A-3 726 832 décrit un procédé de fabrication de verre dans lequel on met en oeuvre un mélange essentiellement constitué de quartz, de carbonate de sodium et de carbonate de calcium, et en ce qu'on remplace une partie de la quantité nécessaire de carbonate de sodium par une solution aqueuse renfermant pondéralement 10 à 30 % d'hydroxyde de sodium.

US-A-4 028 131 décrit une composition verrière dans laquelle on remplace presque tous ou tous les carbonate d'origine naturelle habituellement utilisés pour fournir les oxydes de métaux alcalino-terreux par des oxydes alcalino-terreux et on remplace aussi presque tous ou tous les sulfates ou carbonates de métaux alcalins par des hydroxydes de métaux alcalins. En conséquence, une telle composition renferme de la silice, les oxydes de métaux alcalino-terreux, les hydroxydes de métaux alcalins, et des sulfates et carbonates de métaux alcalins.

EP-A-0 187 574 décrit un procédé de fabrication de verre dans lequel on porte à fusion une composition de départ qui est un précipité obtenu en préparant d'une part une solution d'un silicate alcalin ou d'ammonium, d'autre part une solution d'un sel soluble comme le nitrate, de plomb, de calcium, de baryum, de zinc ou de magnésium, et en les faisant réagir en présence d'un liquide organique polaire miscible comme le méthanol pour obtenir le précipité de départ attendu.

Après de longues recherches, la demanderesse a découvert que l'on pouvait attribuer aux carbonates utilisés dans les compositions conventionnelles deux effets nuisibles, liés d'une part à leur mode de décomposition qui s'accompagne d'un dégagement brutal de gaz carbonique avec formation de produits alcalins très agressifs vis à vis des réfractaires et d'autre part à leur difficulté à se décomposer totalement lors de la formation du réseau vitreux. Le sel non décomposé se dissout dans le réseau vitreux, ne libérant le gaz carbonique que de manière lente et étalée dans le temps, après les phases de fusion et d'affinage.

Le premier effet provoque la formation de défauts par dispersion mécanique de matières réfractaires éclatées au contact du gaz et même par dissolution alcaline de celles-ci dans le verre. C'est ainsi qu'on explique en grande partie la présence de pierres et de cordes dans le verre fondu.

Le deuxième effet, la décomposition retardée des carbonates, entraîne un rebullage intempestif lors du cueillage du verre, ce qui augmente la présence de bulles dans le verre formé, troisième source de rebuts après les pierres et les cordes. On constate que le rebullage a souvent tendance à augmenter lorsque l'on recycle en grande quantité le calcin ou groisil, encore pourvu de carbonates dissous.

La dispersion de petits grains de matières réfractaires, suivie de leur dissolution dans le verre fondu, et la décomposition tardive des carbonates entraînent donc la majeure partie des rebuts dits de fusion, visibles sous forme de pierres, cordes et bulles dans les objets contrôlés après soufflage.

La demanderesse a trouvé une nouvelle manière de fabriquer le verre qui consiste à réduire et de préférence à supprimer les composants à base de carbonates et à les remplacer par d'autres produits, non décomposables ou qui se décomposent ou se combinent à des températures beaucoup plus faibles. Généralement, on choisira des composés formés à base de silicates ou d'hydroxydes. Les composés à base de silicates métalliques présentent l'avantage de favoriser la vitesse de fusion car ils fondent à basse température et apportent une partie de la silice déjà combinée.

La demanderesse a également trouvé que le procédé était amélioré en diminuant les quantités de nitrate du système affinant, ce qui a pour effet de réduire encore les risques de corrosion des réfractaires et du rebullage du verre au cueillage, provoqués par la décomposition tardive des nitrates, lorsqu'ils sont mis en excès.

C'est pourquoi la présente demande a pour objet un procédé de préparation d'un composé verrier caractérisé par le fait:
1 que l'on mélange dans un mélangeur:
   a) 30 à 70 % d'éléments formateurs du réseau vitreux à base d'oxyde de silicium, d'aluminium, de bore ou de phosphore;
   b) 1 à 30 % en poids d'éléments fondants à base d'oxydes alcalins;
   c) 5 à 50 % en poids d'éléments modificateurs du réseau vitreux à base composés oxygénés et non carbonés de calcium, baryum, strontium, plomb, zinc, et de préférence à base d'oxydes de ces métaux;
   d) 0,1 à 2 % en poids d'un système affinant; puis
2 que l'on effectue une fusion et un affinage à une température égale ou supérieure à la température de cueillage du verre.
   Comme éléments formateurs on pourra utiliser les produits traditionnels comme:
   - l'oxyde de silicium, SiO₂;
   - les autres oxydes, Al₂O₃, B₂O₃, P₂O₅.

   Pour les éléments fondants, on fera appel à des oxydes alcalins choisis de préférence parmi les silicates et les hydroxydes à la place des carbonates conventionnels, comme par exemple:
   - le silicate de lithium, de sodium ou de potassium, l'hydroxyde de lithium, de sodium ou de potassium.

   Comme éléments modificateurs, si désiré on choisira aussi des silicates, des hydroxydes ou des oxydes à la place des carbonates conventionnels, par exemple
   - le silicate de calcium ou de baryum, l'hydroxyde de calcium ou de baryum;
   - l'oxyde de plomb ou l'oxyde de zinc.

   Comme éléments du système affinant, on pourra utiliser les produits traditionnels comme:
   - les nitrates de métal alcalin;
   - les oxydes d'antimoine ou d'arsenic.

Dans des conditions préférentielles de mise en oeuvre de l'invention, une composition préparée comme ci-dessus renferme moins de 20 %, avantageusement moins de 15 %, de préférence moins de 10 %, notamment moins de 5 %, particulièrement moins de 2 % de carbonates et tout particulièrement aucun carbonate.

Selon un autre mode préférentiel de mise en oeuvre de l'invention, l'élément fondant à base d'oxydes alcalins est introduit sous forme de silicate de métal alcalin, de préférence de silicate de potassium ou de sodium.

Selon encore un autre mode préférentiel de mise en oeuvre de l'invention, l'élément fondant à base d'oxydes alcalins est introduit sous forme d'hydroxyde de métal alcalin, de préférence d'hydroxyde de potassium ou de sodium.

Selon encore un autre mode préférentiel de mise en oeuvre de l'invention, l'élément modificateur du réseau vitreux est introduit sous forme de silicate de calcium, baryum, strontium, plomb ou zinc.

Selon encore un autre mode préférentiel de mise en oeuvre de l'invention, l'élément modificateur du réseau vitreux est introduit sous forme d'hydroxyde de calcium, baryum, strontium, plomb ou zinc.

Selon encore un autre mode préférentiel de mise en oeuvre de l'invention, l'élément modificateur du réseau vitreux est introduit sous forme d'oxyde de calcium, baryum, strontium, plomb ou zinc.

Selon encore un autre mode préférentiel de mise en oeuvre de l'invention, le système affinant comprend de 0,05 à 0,6 % en poids de nitrate de métal alcalin.

Selon encore un autre mode préférentiel de mise en oeuvre de l'invention, le système affinant comprend de 0,05 à 0,6 % en poids d'oxyde d'antimoine ou d'arsenic.

Les propriétés des compositions obtenues selon l'invention évoquées ci-dessus sont illustrées ci-après dans la partie expérimentale. Elles justifient l'utilisation des compositions ci-dessus décrites pour la fabrication de verre contenant très peu de défauts sous forme de bulles, pierres et cordes et permettant de recycler entièrement le verre déjà fondu selon le procédé sans augmentation des défauts. Par "verre", l'on entend aussi le cristal et le cristallin.

L'invention a donc également pour objet l'utilisation de compositions ci-dessus décrites pour la production de verres en four à pots ou en four continu.

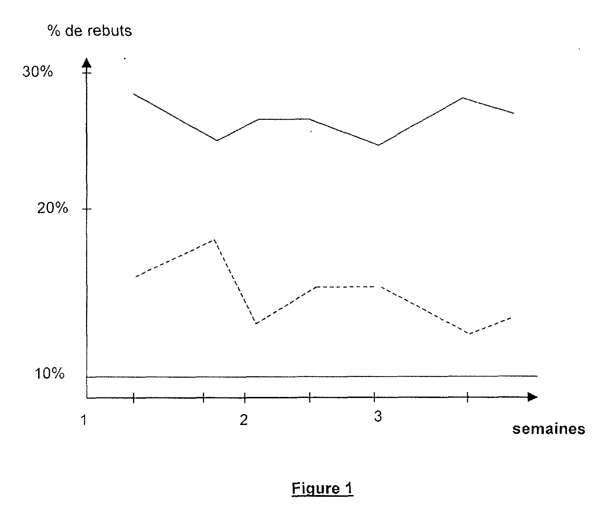

La figure 1 représente le pourcentage de rebuts (en ordonnées), rapporté au temps exprimé en semaines. Les pointillés représentent la composition de l'exemple 1 et le trait plein celle de l'exemple comparatif.

Les conditions préférentielles de mise en oeuvre du procédé ci-dessus décrit s'appliquent également aux autres objets de l'invention visés ci-dessus.

Les exemples qui suivent illustrent la présente invention.

### EXEMPLE 1

Dans un mélangeur, on ajoute successivement:
- 28 kg de sable, représentant une partie de l'élément formateur;
- 50 kg de silicate de potassium atomisé 1 K de Clariant contenant pondéralement;
- 56 % SiO₂ représentant l'autre partie de l'élément formateur, 28 % de K₂O représentant l'élément fondant, et 16 % d'eau;
- 30 kg de minium, représentant l'élément modificateur;
- 0,5 kg de nitrate de sodium, représentant une partie du système affinant;
- 0,4 kg d'oxyde d'antimoine, représentant l'autre partie du système affinant.

Cette composition a permis une fusion à 1300°c en 8 heures, un excellent affinage et très peu de bulles dans les verres fabriqués.

Cette composition permet de fabriquer 100 kg de cristal contenant:
- 56,1 % de SiO₂;
- 29,3 % de PbO;
- 14 % de K₂O;
- 0,2 % de Na₂O;
- 0,4 % de Sb₂O₃.

### EXEMPLE COMPARATIF 1

Dans un mélangeur, on ajoute successivement:
- 56,1 kg de sable, représentant l'élément formateur;
- 20,5 kg de carbonate de potassium, représentant l'élément fondant;
- 30 kg de minium, représentant l'élément modificateur;
- 0,5 kg de nitrate de sodium, représentant une partie du système affinant;
- 0,4 kg d'oxyde d'antimoine, représentant l'autre partie du système affinant.

Cette composition permet de fabriquer 100 kg de cristal contenant:
- 56,1 % de SiO₂;
- 29,3 % de PbO;
- 14 % de K₂O;
- 0,2 % de Na₂O;
- 0,4 % de Sb₂O₃.

Cette composition fond en 10 heures à 1400°C.

Les défauts obtenus tels que les pierres, les bulles et les cordes sont en plus grand nombre dans l'exemple comparatif 1 que dans l'exemple 1 et sont dus à l'utilisation de carbonates. De plus, l'utilisation du calcin restant sera difficile à recycler vu la présence de carbonates dissous dans ce vitreux à recycler. D'ailleurs la variation du taux de rebuts souvent inexpliquée en verrerie est probablement liée à la réutilisation de ce calcin. En effet, comparativement, lorsqu'on supprime les matières carbonatées, on remarque une grande stabilité du taux de rebut de fusion quelle que soit la quantité de calcin recyclé.

Pour expliquer cette différence entre une composition avec et sans matières carbonatées, la demanderesse pense que les matières carbonatées ne sont jamais totalement décomposées et qu'une partie reste dissoute dans le réseau vitreux de manière intime. Cette partie se décompose de manière intempestive à la moindre variation physico-chimique: contact avec la canne de cueillage, contact avec le réfractaire, variation de la hauteur de verre dans l'outil de fusion, variation de température etc.

Le fait d'avoir éliminé ces carbonates dans l'exemple 1 permet après plusieurs recyclages d'obtenir un calcin beaucoup plus performant et donc de limiter les rebuts liés aux restes de carbonates dissous lors d'une fabrication normale. De ce fait, le recyclage du calcin peut augmenter jusqu'à une valeur permettant de recycler tout le verre perdu lors du cueillage et du travail.

Cette différence est illustrée sur la figure 1 jointe en Annexe I. Sur cette figure 1, le taux de rebuts (pierres, cordes et bulles) a diminué de plus de 10 %. De plus, le taux de calcin recyclé a été nettement augmenté, afin de le recycler entièrement.

### EXEMPLE 2

Dans un mélangeur, on ajoute successivement:
- 43,7 kg de sable, représentant une partie de l'élément formateur;
- 29,3 kg de silicate de potassium 1 K de Clariant contenant pondéralement 56 % de SiO₂ représentant l'autre partie de l'élément formateur, 28 % de K₂O représentant une partie de l'élément fondant et 16 % d'eau;
- 9,6 kg d'hydroxyde de sodium, représentant l'autre partie de l'élément fondant;
- 6,7 kg d'hydroxyde de calcium, représentant une partie de l'élément modificateur;
- 9,7 kg de minium, représentant l'autre partie de l'élément modificateur;
- 0,5 kg de nitrate de sodium, représentant une partie du système affinant;
- 0,5 kg d'oxyde d'antimoine, représentant l'autre partie du système affinant.
   Cette composition a permis une fusion à 1300°c en 8 heures, un excellent affinage et très peu de bulles dans le verre fabriqué.

Cette composition permet de fabriquer 91 kg de cristallin contenant:
- 66,0 % de SiO₂;
- 10,4 % de PbO;
- 8,4 % de Na₂O;
- 9,0 % de K₂O;
- 5,6 % de CaO;
- 0,6 % de Sb₂O₃;
- 0,5 % de As₂O₃.

### EXEMPLE COMPARATIF 2

Dans un mélangeur, on ajoute successivement:
- 56,8 kg de sable, représentant l'élément formateur;
- 10,2 kg de carbonate de sodium, représentant une partie de l'élément fondant;
- 11,4 kg de carbonate de potassium, représentant l'autre partie de l'élément fondant;
- 8,5 kg de carbonate de calcium, représentant une partie de l'élément modificateur;
- 9,2 kg de minium, représentant l'autre partie de l'élément modificateur;
- 3,4 kg de nitrate de sodium, représentant une partie du système affinant; - 0,7 kg d'oxyde d'antimoine, représentant l'autre partie du système affinant.

Cette composition permet de fabriquer 86 kg de cristallin contenant:
- 66,2 % de SiO₂;
- 8,4 % de Na₂O;
- 9,0 % de K₂O;
- 5,5 % de CaO;
- 10,4 % de PbO;
- 0,7 % de Sb₂O₃.

Cette composition fond à 1450°C en 10 heures. Le système affinant représente 4,1 % de la composition verrière. Dans l'exemple 2, il est de 1 % seulement.

Les défauts obtenus tels que les pierres, les bulles et les cordes sont en plus grand nombre dans l'exemple comparatif 2 que dans l'exemple 2 et sont dus à l'utilisation de carbonates. En particulier, le carbonate de calcium est encore plus difficile à décomposer que les carbonates alcalins. De plus, l'utilisation du calcin contenant du carbonate de calcium dissous sera encore plus délicat à recycler, car il provoquera un plus grand nombre de défauts. La composition sans carbonates donne lieu à la même amélioration dans l'exemple 2 que dans l'exemple 1 et on observe des courbes d'évolution similaires à celles montrées à la figure 1, avec un recyclage total du calcin.

## Revendications

1. Procédé de préparation d'un composé verrier comprenant traditionnellement des éléments formateurs du réseau vitreux, des éléments fondants du réseau vitreux, des éléments modificateurs du réseau vitreux et des éléments du système affinant, **caractérisé par le fait:**
**que** l'on mélange dans un mélangeur:
- 30 à 70 % en poids d'éléments formateurs du réseau vitreux à base d'oxyde de silicium, d'aluminium, de bore ou de phosphore;
- 1 à 30 % en poids d'éléments fondants à base de silicates alcalins;
- 5 à 50 % en poids d'éléments modificateurs du réseau vitreux à base de composés oxygénés et non carbonés de calcium, baryum, strontium, plomb, zinc;
- 0,1 à 2 % en poids d'un système affinant;
puis que l'on effectue une fusion et un affinage à une température égale ou supérieure à la température de cueillage du verre.

2. Procédé selon la revendication 1, **caractérisé en ce que** l'élément fondant à base d'oxydes alcalins est introduit sous forme de silicate de potassium ou de sodium.

3. Procédé selon l'une des revendications 1 et 2, **caractérisé en ce que** l'élément modificateur du réseau vitreux est introduit sous forme de silicates de calcium, baryum, strontium, plomb, zinc.

4. Procédé selon l'une des revendications 1 à 3, **caractérisé en ce que** l'élément modificateur du réseau vitreux est introduit sous forme d'hydroxyde de calcium, baryum, strontium, plomb, zinc.

5. Procédé selon l'une des revendications 1 à 4, **caractérisé en ce que** l'élément modificateur du réseau vitreux est introduit sous forme d'oxydes de calcium, baryum, strontium, plomb, zinc.

6. Procédé selon l'une des revendications 1 à 5, **caractérisé en ce que** le système affinant comprend 0,05 à 0,6 % en poids d'un nitrate de métal alcalin.

7. Procédé selon l'une des revendications 1 à 6, **caractérisé en ce que** le système affinant comprend 0,05 à 0,6 % en poids d'oxyde d'antimoine ou d'arsenic.

8. Procédé selon l'une des revendications 1 à 7, **caractérisée en ce que** l'on met en oeuvre moins de 5 % de carbonates alcalins ou alcalino-terreux.

9. Procédé selon la revendication 8, **caractérisée en ce que** l'on n'utilise pas de carbonates alcalins ou alcalino-terreux.

10. Utilisation d'une composition pour la fabrication du verre obtenue à l'une des revendications 1 à 7 pour la production de verre en four à pots ou en four continu.
